# EUROPÄISCHE PATENTSCHRIFT

(11) **EP 3 547 515 B1**
(45) Veröffentlichungstag und Bekanntmachung des Hinweises auf die Patenterteilung: **30.09.2020**
(21) Anmeldenummer: 18000310.5
(22) Anmeldetag: 29.03.2018
(51) Int. Cl.: H02M 1/12, H02M 1/44, H02K 11/02, H02K 11/22, H05K 9/00

(54) **STROMVERSORGUNGSVORRICHTUNG FÜR EINEN ELEKTROMOTOR**
POWER SUPPLY FOR AN ELECTRIC MOTOR
DISPOSITIF D'ALIMENTATION EN COURANT POUR UN MOTEUR ÉLECTRIQUE

(43) Veröffentlichungstag der Anmeldung: 02.10.2019
(73) Patentinhaber: Diehl AKO Stiftung & Co. KG, 88239 Wangen (DE); Vaillant GmbH, 8953 Dietikon 1 (CH)
(72) Erfinder: SCHMID, Andreas, 88239 Wangen im Allgäu (DE); WOHLFEIL, Arnold, 42799 Leichlingen (DE); ROTH, Stefan, 42897 Remscheid (DE); SCHNABL, Dennis, 42859 Remscheid (DE)
(74) Vertreter: Diehl Patentabteilung

(56) Entgegenhaltungen:
- JP-A- H03 241 607
- JP-A- 2001 074 611
- JP-A- 2002 281 765
- JP-A- 2016 005 302
- JP-A- 2017 041 920
- US-A- 5 838 877

## Beschreibung

Die vorliegende Erfindung betrifft eine Stromversorgungsvorrichtung für einen Elektromotor mit einem Umrichter sowie eine Motorkabelvorrichtung für eine solche Stromversorgungsvorrichtung.

Es ist allgemein bekannt, dass elektrische Geräte im Betrieb grundsätzlich elektromagnetische Strahlungen aussenden, die elektromagnetische Störungen bei anderen Geräten hervorrufen können. Es ist deshalb ein ständiges Bestreben, die von elektrischen Geräten ausgehende elektromagnetische Strahlung zu minimieren, zum Beispiel durch Reduzieren und/oder Abschirmen der Strahlung. Es muss sichergestellt werden, dass die elektromagnetische Verträglichkeit (EMV) der elektrischen Geräte zulässige Grenzen nicht überschreitet.

Elektromotoren werden häufig von Umrichtern mit Strom versorgt. Zum Minimieren der vom Umrichter bewirkten elektromagnetischen Störaussendung werden beispielsweise Filter in den Umrichter integriert (vgl. z.B. DE 103 27 598 A1) oder Netzfilter zwischen den Umrichter und das Versorgungsnetz geschaltet (vgl. z.B. DE 10 2007 022 503 A1). Allerdings entstehen durch das Takten der IGBTs des Umrichters am Ausgang des Umrichters steile Spannungsflanken, die im Zusammenspiel mit parasitären Kapazitäten zwischen den Motorphasen und dem Motorgehäuse zu kapazitiven Störströmen führen können.

Um Störaussendung vom Leitersystem zwischen einem Elektromotor und einem Umrichter zu reduzieren, ist es bekannt, das Motorkabel zwischen dem Umrichter und dem Elektromotor, welches Abschnitte der Motorphasenleiter und meist auch eines Schutzleiters enthält, mit einer Abschirmung zu versehen. Im Fall der JP 2017-041920 A und der JP 2002-281765 A ist diese Abschirmung des Motorkabels einerseits mit einem motorseitigen Erdungsanschluss des Umrichters und andererseits mit einer Erdung des Motors verbunden.

Es ist die Aufgabe der vorliegenden Erfindung, die Störaussendung vom Leitersystem zwischen einem Elektromotor und einem Umrichter weiter zu reduzieren, um die elektromagnetische Verträglichkeit einer Stromversorgungsvorrichtung für einen Elektromotor zu verbessern.

Diese Aufgabe wird gelöst durch die Lehre des Patentanspruchs 1. Besonders bevorzugte Ausgestaltungen und Weiterbildungen der Erfindung sind Gegenstand der abhängigen Ansprüche.

Die erfindungsgemäße Stromversorgungsvorrichtung für einen Elektromotor weist einen Umrichter mit einem Eingang zum Anschließen des Umrichters an eine Stromversorgungsquelle, einem Wechselrichter zum Bereitstellen einer Wechselspannung für einen Elektromotor und einer mit einem Schutzleiter der Stromversorgungsquelle verbundenen Erdung sowie eine Stromverbindungseinrichtung zum Verbinden des Elektromotors mit dem Wechselrichter und der Erdung des Umrichters auf, wobei die Stromverbindungseinrichtung mehrere Motorphasenleiter und einen Schutzleiter enthält und wobei die Stromverbindungseinrichtung ein Motorkabel aufweist, das zumindest Abschnitte der mehreren Motorphasenleiter und des Schutzleiters enthält und mit einer Abschirmung versehen ist. Gemäß der Erfindung ist der Schutzleiter der Stromverbindungseinrichtung im Bereich zwischen dem abgeschirmten Motorkabel und dem Elektromotor mit einer zusätzlichen Abschirmung versehen, die mit wenigstens einem Schirmanschluss eines Motorgehäuses des Elektromotors verbunden ist.

Erfindungsgemäß wird vorgeschlagen, den Schutzleiter der Stromverbindungseinrichtung im Bereich zwischen dem abgeschirmten Motorkabel und dem Elektromotor abzuschirmen. Die Erfinder haben herausgefunden. dass beim Zurückfließen von kapazitiven Störströmen über den Schutzleiter zum Umrichter durch die ungeschirmten Leitungsabschnitte der Motorphasenleiter und des Schutzleiters zwischen dem abgeschirmten Motorkabel und dem Elektromotor, welche anschlussbedingt in der Regel nicht unmittelbar nebeneinander verlaufen, eine magnetische Antenne gebildet wird, die in diesem Bereich ein Störfeld aussendet. Dieses Störfeld kann durch die zusätzliche Abschirmung des Schutzleiters im Bereich zwischen abgeschirmtem Motorkabel und Elektromotor deutlich reduziert werden. Als Folge davon kann die vom Leitersystem zwischen Elektromotor und Umrichter ausgehende Störaussendung deutlich reduziert werden, wodurch die elektromagnetische Verträglichkeit der Stromversorgungsvorrichtung verbessert werden kann.

Je länger die ungeschirmten Leitungsabschnitte der Motorphasenleiter und des Schutzleiters sind, umso größer ist die durch diese Leitungsabschnitte aufgespannte Fläche der magnetischen Antenne und dementsprechend umso größer ist das hierdurch erzeugte Störfeld. Deshalb ist der erfindungsgemäße Vorschlag einer zusätzlichen Abschirmung des Schutzleiters im Bereich zwischen abgeschirmtem Motorkabel und Elektromotor besonders bei größeren Abständen des Motorkabels zum Erdungsanschluss des Motorgehäuses von Vorteil.

In einer Ausgestaltung der Erfindung weist die Abschirmung des Schutzleiters zwischen dem abgeschirmten Motorkabel und dem Elektromotor einen ersten Endbereich und einen zweiten Endbereich auf, wobei der erste Endbereich mit einem ersten Schirmanschluss des Motorgehäuses des Elektromotors verbunden ist und der zweite Endbereich mit einem zweiten Schirmanschluss des Motorgehäuses des Elektromotors verbunden ist. Mit anderen Worten werden beide Endbereiche der Abschirmung des Schutzleiters jeweils mit einem Schirmanschluss des Motorgehäuses des Elektromotors verbunden. Auf diese Weise lässt sich die Schirmwirkung des geschirmten Schutzleiters besonders effektiv verbessern. Dies lässt sich damit erklären, dass die Schirmwirkung des geschirmten Schutzleiters auf den Strömen basiert, die sich in dessen Abschirmung ausbilden können. Diese Ströme sind nach der Lenz'schen Regel ihrer Entstehungsursache, der Änderung des Magnetfelds um den Schutzleiter, entgegengerichtet, wodurch sie mit ihrem eigenen Magnetfeld zu einer Kompensation des Magnetfelds um den Schutzleiter führen. Die Wirkung der Kompensation ist umso besser, je niederimpedanter der geschlossene Kreis der Induktionsströme ist, weil dann die Induktionsströme umso höher sind. Durch die beidseitige Verbindung der Schutzleiter-Abschirmung mit zwei Schirmanschlüssen des Motorgehäuses können die Induktionsströme in der Schutzleiter-Abschirmung direkt über die zweite Verbindung der Abschirmung ins Motorgehäuse und von dort über den ersten Schirmanschluss des Motorgehäuses zurück zur Abschirmung fließen. Der Stromkreis für die Schirmströme wird dadurch sehr kurz und niederimpedant, weshalb große Schirmströme fließen können. Entsprechend kann die schirmende Wirkung des Schutzleiters deutlich verbessert werden.

In einer anderen Ausgestaltung der Erfindung weist die Abschirmung des Schutzleiters zwischen dem abgeschirmten Motorkabel und dem Elektromotor einen ersten Endbereich und einen zweiten Endbereich auf, wobei der erste Endbereich mit einem Schirmanschluss des Motorgehäuses des Elektromotors verbunden ist und der zweite Endbereich (direkt oder indirekt) mit der Erdung des Umrichters verbunden ist. Im Vergleich zur vorherigen Ausgestaltung ist bei dieser Ausgestaltung nur ein Endbereich der Schutzleiter-Abschirmung mit einem Schirmanschluss des Motorgehäuses verbunden, während der andere Endbereich direkt oder indirekt mit der Erdung des Umrichters verbunden ist. So können die Ströme in der Schutzleiter-Abschirmung zum Beispiel über die Abschirmung des Motorkabels zum Umrichter und von dort über den Schutzleiter der Stromversorgungsquelle zum Gehäuse des Gesamtgeräts und von dort zum Elektromotor zurück fließen. Dieser geschlossene Kreis der Schirmströme ist im Vergleich zur vorherigen Ausgestaltung länger, führt aber dennoch zu einer Reduzierung des Störfeldes. Diese Ausgestaltung kann insbesondere bei kleineren Abständen zwischen dem Motorkabel und dem Erdungsanschluss des Motorgehäuses ausreichend effektiv sein.

In einer weiteren Ausgestaltung der Erfindung ist der Schutzleiter der Stromverbindungseinrichtung mit einem Erdungsanschluss des Elektromotors (z.B. in Form einer Erdungsschraube am Motorgehäuse) verbunden. Bei dieser Ausgestaltung ist der erste Schirmanschluss bzw. der eine Schirmanschluss des Motorgehäuses des Elektromotors, mit dem der erste Endbereich der Schutzleiter-Abschirmung verbunden ist, vorzugsweise durch diesen Erdungsanschluss des Elektromotors gebildet. Bei dem zweiten Schirmanschluss des Motorgehäuses kann es sich beispielsweise um eine Gewindestange zur Befestigung eines Temperatursensors oder dergleichen handeln.

In einer weiteren Ausgestaltung der Erfindung ist die Abschirmung des Motorkabels mit der Abschirmung des Schutzleiters und/oder mit der Erdung des Umrichters verbunden. Durch das geschirmte Motorkabel kann verhindert werden, dass es zwischen dem Motorkabel und der Umgebung (z.B. benachbarte Kabel, leitfähige Gehäuseteile, usw.) zu kapazitiven oder induktiven Kopplungen kommen kann. In einer weiteren Ausführungsvariante der Erfindung kann das Motorkabel der Stromverbindungseinrichtung zusätzlich zur geerdeten Abschirmung eine ferromagnetische Umhüllung aufweisen. Diese ferromagnetische Umhüllung umgibt vorzugsweise zumindest die Motorphasenleiter und ist vorzugsweise aus einem ferromagnetischen Material oder Ferrit gebildet..

In einer noch weiteren Ausgestaltung der Erfindung ist ferner ein Ausgangsfilter vorgesehen, in dem die mehreren Motorphasenleiter und der Schutzleiter der Stromverbindungseinrichtung jeweils um einen Induktionskern gewickelt sind. Vorzugsweise sind die mehreren Motorphasenleiter und der Schutzleiter in dem Ausgangsfilter um einen gemeinsamen Induktionskern gewickelt. Vorzugsweise werden die mehreren Motorphasenleiter und der Schutzleiter der Stromverbindungseinrichtung gleichsinnig um den (gemeinsamen) Induktionskern gewickelt. Die Wicklung der Motorphasenleiter und des Schutzleiters um den Induktionskern erfolgt vorzugsweise mit zwei, drei, vier oder mehr Windungen. Der Induktionskern ist vorzugsweise aus einem ferromagnetischen Material oder einem Ferrit gebildet. Durch das (vorzugsweise gleichsinnige) Wickeln sowohl der Motorphasenleiter als auch des Schutzleiters um einen (vorzugsweise gemeinsamen) Induktionskern wird eine Gleichtaktdrossel gebildet, wodurch zwischen den Motorphasenleitern und dem Schutzleiter der Stromverbindungseinrichtung ein Transformator mit einem Übersetzungsverhältnis von 1 entsteht. Bei Auftreten eines kapazitiven Störstroms in einem Motorphasenleiter wird eine Spannung in dieser Wicklung induziert. Da die Gleichtaktdrossel einen Transformator mit Übersetzungsverhältnis 1 darstellt, wird die gleiche Spannung auch in der Wicklung des Schutzleiters induziert. Hierdurch sinkt die dem Elektromotor zugewandte Seite der Schutzleiterwicklung spannungsmäßig ins Negative. Da die Erde am Motorgehäuse über das Erdungssystem nach wie vor spannungsmäßig auf 0 V liegt, werden die Störungen gezwungen, über den Induktionskern zurück zum Umrichter zu fließen. Entsprechend können die unerwünschten Störströme, welche den Elektromotor über das an das Motorgehäuse angeschlossene Erdungssystem verlassen, drastisch reduziert werden. Ein weiterer Vorteil des Rückflusses der Störungen zum Umrichter liegt darin, dass die Störungen auf ihrem Weg vom Umrichter zum Elektromotor und wieder zurück mit unterschiedlicher Stromrichtung verlaufen. Da die aufgespannte Fläche von Hin- und Rückleitern minimal groß ist, kompensieren sich die Magnetfelder des vorlaufenden und zurücklaufenden Störstroms, sodass die magnetische Störaussendung der Stromverbindungseinrichtung stark reduziert werden kann. Die erfindungsgemäße Entstörmaßnahme ist besonders vorteilhaft, wenn das Motorgehäuse des Elektromotors mit einem langen Erdungssystem (z.B. Hydraulikrohre) verbunden ist. Mit dieser Ausführungsform der Stromversorgungsvorrichtung können insbesondere Störspannungen im Frequenzbereich von etwa 150 kHz bis 30 MHz, Störleistungen im Frequenzbereich von etwa 30 MHz bis 300 MHz sowie Störfeldstärken im Frequenzbereich von etwa 30 MHz bis 1 GHz verbessert werden. Bei einem untersuchten Beispiel für einen Elektromotor einer Wärmepumpe konnte beispielsweise eine deutliche Reduzierung des Störpegels im Frequenzbereich von etwa 8 MHz bis 30 MHz (Störspannung) und von etwa 30 MHz bis 50 MHz (Störleistung, Störfeldstärke) festgestellt werden.

In einer Ausführungsvariante dieser Ausgestaltung weist der Umrichter einen Ausgang auf, dessen Ausgangsanschlüsse mit dem Wechselrichter und der Erdung verbunden sind und an den das Motorkabel angeschlossen ist oder anschließbar ist, und ist das Ausgangsfilter zwischen dem Wechselrichter und dem Ausgang des Umrichters vorgesehen. D.h. das Ausgangsfilter ist an einem Leitungsabschnitt der Stromverbindungseinrichtung innerhalb des Umrichters vorgesehen und so in den Umrichter integriert. Bei dieser Ausführungsvariante sind der Umrichter und das Ausgangsfilter vorzugsweise in einem gemeinsamen Umrichtergehäuse angeordnet, wobei dieses Umrichtergehäuse bevorzugt mit der Erdung des Umrichters verbunden ist.

In einer anderen Ausführungsvariante dieser Ausgestaltung weist der Umrichter einen Ausgang auf, dessen Ausgangsanschlüsse mit dem Wechselrichter und der Erdung verbunden sind, und ist das Ausgangsfilter zwischen dem Ausgang des Umrichters und dem Motorkabel vorgesehen. D.h. das Ausgangsfilter ist als eine separate Komponente zu Umrichter und Motorkabel ausgestaltet und zwischen diesen beiden Komponenten angeordnet.

In einer noch anderen Ausführungsvariante dieser Ausgestaltung weist der Umrichter einen Ausgang auf, dessen Ausgangsanschlüsse mit dem Wechselrichter und der Erdung verbunden sind und an den das Motorkabel angeschlossen ist oder anschließbar ist, und ist das Ausgangsfilter in das Motorkabel integriert.

In einer noch weiteren Ausgestaltung der Erfindung weist der Umrichter einen Gleichrichter zum Umwandeln einer Wechselspannung von der Stromversorgungsquelle in eine Gleichspannung und einen Gleichspannungszwischenkreis zwischen dem Gleichrichter und dem Wechselrichter auf. In diesem Fall ist der Schutzleiter der Stromverbindungseinrichtung vorzugsweise kapazitiv mit dem Gleichstromzwischenkreis des Umrichters verbunden.

Gegenstand der Erfindung ist auch eine Motorkabelvorrichtung zum Verbinden eines Elektromotors mit einem Umrichter, die ein Motorkabel mit mehreren Motorphasenleitern und einem Schutzleiter, das mit einer Abschirmung (38) versehen ist, sowie eine zusätzliche Abschirmung für den Schutzleiter des Motorkabels im Bereich zwischen dem abgeschirmten Motorkabel und dem Elektromotor aufweist, wobei die Abschirmung des Schutzleiters mit wenigstens einem Schirmanschluss eines Motorgehäuses des Elektromotors verbindbar ist oder verbunden ist. Diese Motorkabelvorrichtung ist insbesondere für eine oben beschriebene Stromversorgungsvorrichtung der Erfindung in vorteilhafter Weise einsetzbar.

In einer Ausgestaltung der Erfindung weist die Abschirmung des Schutzleiters zwischen dem abgeschirmten Motorkabel und dem Elektromotor einen ersten Endbereich und einen zweiten Endbereich auf, wobei der erste Endbereich mit einem ersten Schirmanschluss des Motorgehäuses des Elektromotors verbindbar ist oder verbunden ist und der zweite Endbereich mit einem zweiten Schirmanschluss des Motorgehäuses des Elektromotors verbindbar ist oder verbunden ist.

In einer anderen Ausgestaltung der Erfindung weist die Abschirmung des Schutzleiters zwischen dem abgeschirmten Motorkabel und dem Elektromotor einen ersten Endbereich und einen zweiten Endbereich auf, wobei der erste Endbereich mit einem Schirmanschluss des Motorgehäuses des Elektromotors verbindbar ist oder verbunden ist und der zweite Endbereich (direkt oder indirekt) mit einer Erdung eines Umrichters, an den die Motorphasenleiter und der Schutzleiter des Motorkabels anschließbar sind oder angeschlossen sind, verbindbar ist oder verbunden ist.

Vorzugsweise ist die Abschirmung des Motorkabels mit der Abschirmung des Schutzleiters verbunden.

Obige sowie weitere Merkmale und Vorteile der Erfindung werden aus der nachfolgenden Beschreibung von bevorzugten, nicht-einschränkenden Ausführungsbeispielen anhand der beiliegenden Zeichnung besser verständlich. Darin zeigen, zum Teil schematisch:
- Fig. 1: ein Blockschaltbild einer Stromversorgungsvorrichtung gemäß einem ersten Ausführungsbeispiel der vorliegenden Erfindung;
- Fig. 2: ein Blockschaltbild einer Stromversorgungsvorrichtung gemäß einem zweiten Ausführungsbeispiel der vorliegenden Erfindung;
- Fig. 3: ein Blockschaltbild einer Ausführungsvariante der Stromversorgungsvorrichtung, die nicht Gegenstand der vorliegenden Erfindung ist;
- Fig. 4: ein Blockschaltbild einer Stromversorgungsvorrichtung gemäß einem dritten Ausführungsbeispiel der vorliegenden Erfindung; und
- Fig. 5: ein Blockschaltbild einer Stromversorgungsvorrichtung gemäß einem vierten Ausführungsbeispiel der vorliegenden Erfindung.

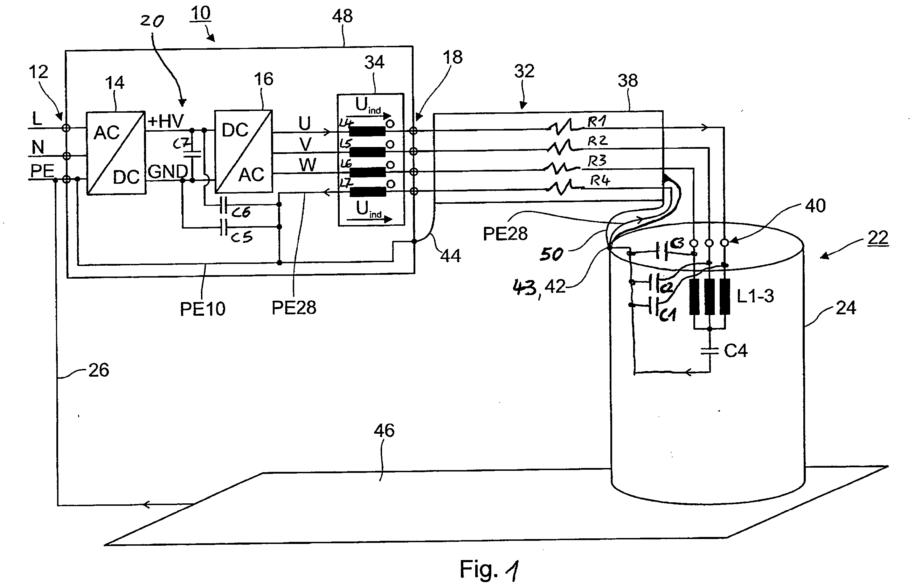

Fig. 1 zeigt ein erstes Ausführungsbeispiel einer Stromversorgungsvorrichtung gemäß der Erfindung, an die ein Elektromotor zum Beispiel einer Wärmepumpe angeschlossen ist.

Die Stromversorgungsvorrichtung weist insbesondere einen Umrichter 10 und eine Stromverbindungseinrichtung auf.

Der Umrichter 10 hat einen Eingang 12, an den eine Stromversorgungsquelle (z.B. ein Stromnetz mit einem Außenleiter L, einem Neutralleiter N und einem Schutzleiter PE) angeschlossen ist bzw. anschließbar ist. Im Umrichter 10 sind ein Gleichrichter (AC/DC) 14 zum Umwandeln einer Wechselspannung von dieser Stromversorgungsquelle in eine Gleichspannung und ein Wechselrichter (DC/AC) 16 zum Bereitstellen einer mehrphasigen Wechselspannung für den Elektromotor 22 vorhanden. Die mehrphasige Wechselspannung kann an entsprechenden Ausgangsanschlüssen eines Ausgangs 18 des Umrichters 10 abgegriffen werden. Zusätzlich ist im Umrichter 10 zwischen dem Gleichrichter 14 und dem Wechselrichter 16 ein Gleichspannungszwischenkreis 20 mit einer Kapazität C7 vorgesehen.

Durch den Umrichter 10 ist zudem eine Erdung PE10 geführt, die einerseits über einen entsprechenden Eingangsanschluss des Eingangs 12 mit dem Schutzleiter PE der Stromversorgungsquelle verbunden ist und andererseits mit einem entsprechenden Ausgangsanschluss des Ausgangs 18 verbunden ist.

Der Elektromotor 22 ist über eine Stromverbindungseinrichtung mit dem Umrichter 10 verbunden. Diese Stromverbindungseinrichtung enthält mehrere (hier: drei) Motorphasenleiter U, V, W und einen Schutzleiter PE28. Die Motorphasenleiter U, V, W sind einerseits mit den entsprechenden Ausgängen des Wechselrichters 16 bzw. den entsprechenden Ausgangsanschlüssen des Ausgangs 18 des Umrichters 10 verbunden und andererseits mit den entsprechenden Motoranschlüssen 40 bzw. den mit diesen verbundenen Motorwicklungen L1, L2, L3 des Elektromotors 22 verbunden. Der Schutzleiter PE28 der Stromverbindungseinrichtung 28 ist einerseits mit dem entsprechenden Ausgangsanschluss des Ausgangs 18 des Umrichters 10 und damit mit dem Schutzleiter PE der Stromversorgungsquelle verbunden und andererseits mit einem Erdungsanschluss 42 (z.B. in Form einer Erdungsschraube) des Motorgehäuses 24 des Elektromotors 22 verbunden. Wie in Fig. 1 dargestellt, sind die Motorwicklungen L1, L2, L3 kapazitiv mit dem Motorgehäuse 24 gekoppelt (C1, C2, C3, C4). Außerdem ist der Schutzleiter PE28 der Stromverbindungseinrichtung 28 kapazitiv mit dem Gleichspannungszwischenkreis 20 des Umrichters 10 gekoppelt (C5, C6).

Die Stromverbindungseinrichtung umfasst zudem mehrere Abschnitte, durch die jeweils die mehreren Motorphasenleiter U, V, W und der Schutzleiter PE28 geführt sind. Ein erster Leitungsabschnitt befindet sich innerhalb des Umrichters 10 zwischen dem Wechselrichter 16 und den Ausgangsanschlüssen des Ausgangs 18. Den Hauptbestandteil der Stromverbindungseinrichtung 28 bildet ein Motorkabel 32 (mit den Leitungswiderständen R1, R2, R3, R4).

Die Stromverbindungseinrichtung 28 weist zudem ein Ausgangsfilter 34 auf. In diesem Ausgangsfilter 34 sind sowohl die Motorphasenleiter U, V, W als auch der Schutzleiter PE28 gleichsinnig mit beispielsweise drei Windungen um einen gemeinsamen Induktionskern gewickelt, der aus einem ferromagnetischen Material oder Ferrit gebildet ist. Fig. 1 zeigt die entsprechenden Wicklungen L4, L5, L6 der Motorphasenleiter U, V, W und die entsprechende Wicklung L7 des Schutzleiters PE28 um den Induktionskern.

Beim Takten der Motorphasen kann es aufgrund der Kapazitäten C1, C2, C3, C4 im Elektromotor 22 zu Störströmen kommen, die vom Umrichter 10 über diese Motorkapazitäten C1, C2, C3, C4 in das mit dem Motorgehäuse 24 verbundene Erdungssystem 26 abfließen. Da dieses Erdungssystem 26 aufgrund seiner geometrischen Ausmaße üblicherweise eine große Fläche aufspannt, würde dieser Störstrom zu einer großen Störaussendung führen. Diese Störaussendung wird durch das Ausgangsfilter 34 der Stromverbindungseinrichtung 28 minimiert.

Durch die Wicklung der Motorphasenleiter U, V, W und des Schutzleiters PE28 um den Induktionskern wird eine Gleichtaktdrossel gebildet, sodass zwischen den Motorphasenleitern U, V, W und dem Schutzleiter PE28 ein Transformator mit einem Übersetzungsverhältnis 1 entsteht. Wird beispielsweise die Motorphase U getaktet, so entsteht in der Wicklung L4 des Motorphasenleiters U ein Stromfluss, der in der Wicklung L4 einen Spannungsabfall verursacht. Da die Wicklung L4 und die Wicklung L7 über den Induktionskern magnetisch miteinander gekoppelt sind, wird auch in der Wicklung L7 des Schutzleiters PE28 die gleiche Spannung induziert. Infolgedessen sinkt der dem Elektromotor 22 zugewandte (in Fig. 1 rechte Anschluss) der Wicklung L7 spannungsmäßig ins Negative.

Für den kapazitiven Störstrom auf dem Motorgehäuse 24 gibt es grundsätzlich zwei mögliche Wege, um zum Umrichter 10 zurückzufließen. Der Störstrom kann entweder über das Motorkabel 32 (Widerstand R4) und den Induktionskern oder über das am Motorgehäuse 24 angeschlossene Erdungssystem 26 (Widerstand R5) zum Umrichter 10 zurückfließen. Die Widerstände R4 und R5 sind beide mit dem Motorgehäuse 24 verbunden, sodass die dem Elektromotor 22 zugewandten (in Fig. 1 rechten) Anschlüsse dieser beiden Widerstände auf gleichem Spannungspotenzial liegen. Da der dem Umrichter 10 zugewandte (in Fig. 1 linke) Anschluss des Widerstands R4 durch die oben beschriebene Wirkung des Induktionskerns spannungsmäßig gegen Erde negativ wird, ist der Spannungsabfall über dem Widerstand R4 größer als der Spannungsabfall über dem Widerstand R5 (falls beide Widerstände gleich groß sind). Infolgedessen wird der Störstrom dazu gezwungen, auf direktem Weg vom Motorgehäuse 24 über den Schutzleiter PE28 zurück zum Umrichter 10 zurückzufließen. Im Umrichter 10 wird mit den zwei Kondensatoren C5 und C6 dafür gesorgt, dass sich der Störstrom kapazitiv zum Zwischenkreis 20 (Kondensator C7) kurzschließen kann.

Ein weiterer Vorteil des Rückflusses der Störströme über den Schutzleiter PE28 des Motorkabels 32 ist die Tatsache, dass die Störungen auf ihrem Weg vom Umrichter zum Elektromotor 22 und wieder zurück im gleichen Motorkabel 32 mit unterschiedlicher Stromrichtung verlaufen. Da die aufgespannte Fläche von Hin- und Rückleiter minimal groß ist, kompensieren sich die Magnetfelder des vorlaufenden und des zurücklaufenden Störstroms. Durch diesen Mechanismus wird die Störaussendung des Motorkabels 32 bzw. der Stromverbindungseinrichtung stark reduziert.

Die beschriebene Entstörmaßnahme zwischen dem Wechselrichter 16 des Umrichters 10 und dem Elektromotor 22 ist besonders effektiv, wenn das Motorgehäuse 24 mit einem langen Erdungssystem 26 (z.B. Hydraulikrohre) verbunden ist. Bei einem Elektromotor 32 einer Wärmepumpe haben beispielhafte Messungen eine deutliche Reduzierung des Störpegels im Frequenzbereich von etwa 8 MHz bis 50 MHz bewirkt.

In dem Ausführungsbeispiel von Fig. 1 ist das Ausgangsfilter 34 zwischen den Ausgangsanschlüssen des Ausgangs 18 des Umrichters 10 einerseits und dem Wechselrichter 16 und der Erdung PE10 des Umrichters 10 andererseits angeordnet. Auf diese Weise können die Längen der ungeschirmten Leitungsabschnitte der Motorphasenleiter U, V, W und des Erdungsleiters PE28 zwischen dem Motorkabel 32 und dem Umrichter 10 relativ klein gehalten werden. Außerdem sind der Umrichter 10 und das Ausgangsfilter 34 optional in einem gemeinsamen Umrichtergehäuse 48 aus Kunststoff oder Metall untergebracht.

Wie in Fig. 1 dargestellt, hat die Stromverbindungseinrichtung ein geschirmtes Motorkabel 32. D.h. das Motorkabel 32 weist eine (elektrisch leitfähige) Abschirmung 38 auf. Diese Abschirmung 38 ist einerseits über eine Erdungsverbindung 44 mit der Erdung PE10 des Umrichters 10 und andererseits mit einem Erdungsanschluss 42 des Elektromotors 22 bzw. seines Motorgehäuses 24 verbunden.

Durch eine derartige Abschirmung 38 des Motorkabels 32 kann verhindert werden, dass es zwischen dem Motorkabel 32 und der Umgebung (z.B. benachbarte Kabel, leitfähige Gehäuseteile, usw.) zu kapazitiver oder induktiver Kopplung kommt.

Da der Teil der Motorphasenleiter U, V, W und des Schutzleiters PE28 zwischen dem abgeschirmten Motorkabel 32 und dem Motorgehäuse 24 des Elektromotors 22 anschlussbedingt in der Regel nicht unmittelbar nebeneinander verlaufen, würde bei einem ungeschirmten Schutzleiter PE28 in diesem Bereich eine magnetische Antenne entstehen, deren Abstrahlwirkung direkt proportional zur zwischen der von dem jeweiligen Motorphasenleiter (z.B. Phase U) und dem Schutzleiter PE28 aufgespannten Fläche ist. Um diese im Bereich zwischen dem abgeschirmten Motorkabel 32 und dem Elektromotor 22 verursachte Störaussendung zu reduzieren, ist erfindungsgemäß eine weitere Abschirmung 50 vorgesehen, die den Leitungsabschnitt des Schutzleiters PE28 zwischen dem abgeschirmten Motorkabel 32 und dem Erdungsanschluss 42 am Motorgehäuse 24 des Elektromotors 22 abschirmt.

Durch diese Maßnahme wird der ungeschirmte Teil der magnetischen Antenne auf ein Minimum reduziert, da nur noch das Kabelende der Motorphasenleiter U, V, W zwischen dem abgeschirmten Motorkabel 32 und dem Elektromotor 22 ungeschirmt ist. Infolgedessen führt die weitere Abschirmung 50 des Schutzleiters PE28 - vorzugsweise in Kombination mit dem Ausgangsfilter 34 - zu einer starken Reduzierung der Störaussendung.

Wie in Fig. 1 dargestellt, ist der in Fig. 1 untere erste Endbereich der Abschirmung 50 des Schutzleiters PE28 mit dem Erdungsanschluss 42 des Elektromotors 22 verbunden, der einen Schirmanschluss 43 des Motorgehäuses 24 im Sinne der Erfindung bildet. Außerdem ist der in Fig. 1 obere zweite Endbereich der Abschirmung 50 des Schutzleiters PE28 mit der Abschirmung 38 des Motorkabels 32 und somit mit der Erdung PE10 des Umrichters 10 verbunden.

Wie eingangs erläutert, kann durch diese Verbindung beider Endbereiche der Abschirmung 50 des Schutzleiters PE28 jeweils mit einer Erdung 42, PE10 die Schirmwirkung des geschirmten Schutzleiters PE28 noch weiter verbessert werden. Die Schirmwirkung des geschirmten Schutzleiters PE28 basiert auf den Strömen, die sich in dessen Abschirmung 50 ausbilden können und nach der Lenz'schen Regel ihrer Entstehungsursache, der Änderung des Magnetfelds um den Schutzleiter, entgegengerichtet sind, wodurch sie mit ihrem eigenen Magnetfeld zu einer Kompensation des Magnetfelds um den Schutzleiter PE28 führen. In dem Ausführungsbeispiel von Fig. 1 können die Ströme in der Schutzleiter-Abschirmung 50 über die Abschirmung 38 des Motorkabels 32 zum Umrichter 10 und von dort über den Schutzleiter PE der Stromversorgungsquelle zum Gehäuse 46 des Gesamtgeräts und von dort zum Elektromotor 22 zurück fließen.

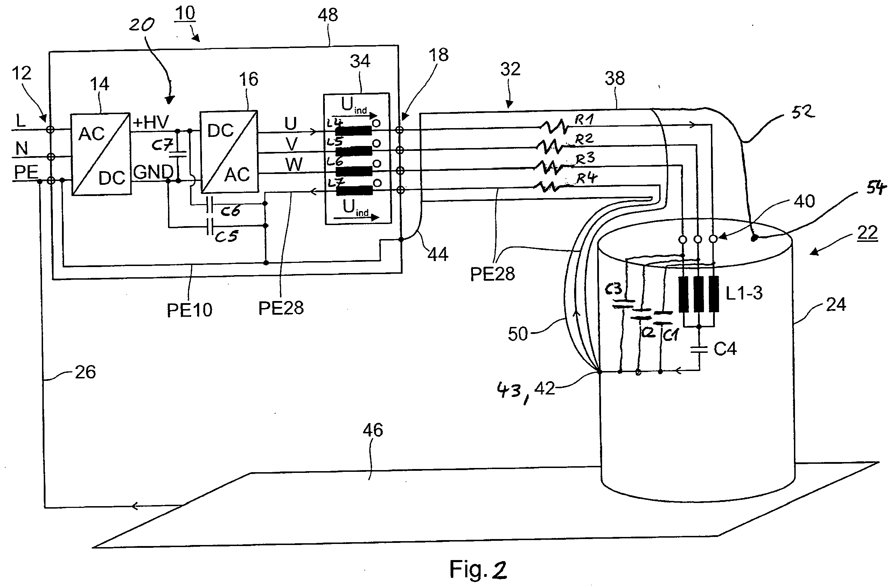

Fig. 2 zeigt ein zweites Ausführungsbeispiel einer Stromversorgungsvorrichtung gemäß der Erfindung, an die ein Elektromotor zum Beispiel einer Wärmepumpe angeschlossen ist. Gleiche Komponenten und Bauteile sind dabei mit den gleichen Bezugszeichen wie im ersten Ausführungsbeispiel gekennzeichnet.

Die Stromversorgungsvorrichtung des zweiten Ausführungsbeispiels unterscheidet sich von jener des ersten Ausführungsbeispiels durch die Lage des Erdungsanschlusses 42 am Motorgehäuse 24 und die Verbindung der Abschirmung 50 des Schutzleiters PE28 mit zwei Schirmanschlüssen 43, 54 am Motorgehäuse 24 des Elektromotors 22.

Da der Erdungsanschluss 42 des Elektromotors 22 typischerweise vom Motorhersteller vorgegeben wird, hat der Hersteller der Stromversorgungsvorrichtung in der Regel keinen Einfluss auf die Lage dieses Erdungsanschlusses 42. Wie in Fig. 2 dargestellt, kann sich der Erdungsanschluss 42 des Motorgehäuses 24 des Elektromotors 22 entfernt von den Motoranschlüssen 40 für die Motorphasenleiter U, V, W befinden (weiter unten am Motorgehäuse 24 in Fig. 2). Bei einem ungeschirmten Schutzleiter PE28 würde sich deshalb eine magnetische Antenne mit einer größeren aufgespannten Fläche zwischen dem ungeschirmten Teil des jeweiligen Motorphasenleiters (z.B. Phase U) und dem Schutzleiter PE28 des Motorkabels 32 am Elektromotor 22 ergeben, was eine Erhöhung der von dieser magnetischen Antenne abgestrahlten Störaussendung zur Folge haben würde.

Wie in Fig. 2 dargestellt, ist der in Fig. 2 untere erste Endbereich der Abschirmung 50 des Schutzleiters PE28 mit dem Erdungsanschluss 42 des Elektromotors 22 verbunden, der einen Schirmanschluss 43 des Motorgehäuses 24 im Sinne der Erfindung bildet. Außerdem ist der in Fig. 2 obere zweite Endbereich der Abschirmung 50 des Schutzleiters PE28 über eine Schirmverbindung 52 mit einem zweiten Schirmanschluss 54 des Motorgehäuses 24 verbunden. Der zweite Schirmanschluss 54 wird zum Beispiel durch eine Gewindestange zur Befestigung eines Temperatursensors gebildet.

Wie eingangs erläutert, kann durch diese Verbindung beider Endbereiche der Abschirmung 50 des Schutzleiters PE28 jeweils mit einem Schirmanschluss 43, 54 des Motorgehäuses 24 des Elektromotors 22 die Schirmwirkung des geschirmten Schutzleiters PE28 noch weiter verbessert werden. Falls nur der eine Endbereich der Schutzleiter-Abschirmung 50 mit dem Schirmanschluss 43 des Motorgehäuses 24 verbunden wäre, wie im ersten Ausführungsbeispiel, könnten die Ströme in der Schutzleiter-Abschirmung 50 zum Beispiel über die Abschirmung 38 des Motorkabels 32 zum Umrichter 10 und von dort über den Schutzleiter PE der Stromversorgungsquelle zum Gehäuse 46 des Gesamtgeräts und von dort zum Elektromotor 22 zurück fließen. Durch die zusätzliche Verbindung auch des zweiten Endbereichs der Schutzleiter-Abschirmung 50 mit dem zweiten Schirmanschluss 54 des Motorgehäuses 24 können die Induktionsströme in der Schutzleiter-Abschirmung 50 hingegen direkt über die zusätzliche Verbindung der Abschirmung 50 ins Motorgehäuse 24 und von dort über den ersten Schirmanschluss 43 des Motorgehäuses 24 zurück zur Abschirmung 50 fließen. Der Stromkreis für die Schirmströme wird dadurch drastisch kürzer und niederimpedanter, weshalb größere Schirmströme fließen können. Entsprechend kann die schirmende Wirkung des Schutzleiters PE28 deutlich verbessert werden, was insbesondere bei größeren Abständen zwischen Motorkabel 32 und Elektromotor 22 von Vorteil ist, wie in diesem zweiten Ausführungsbeispiel.

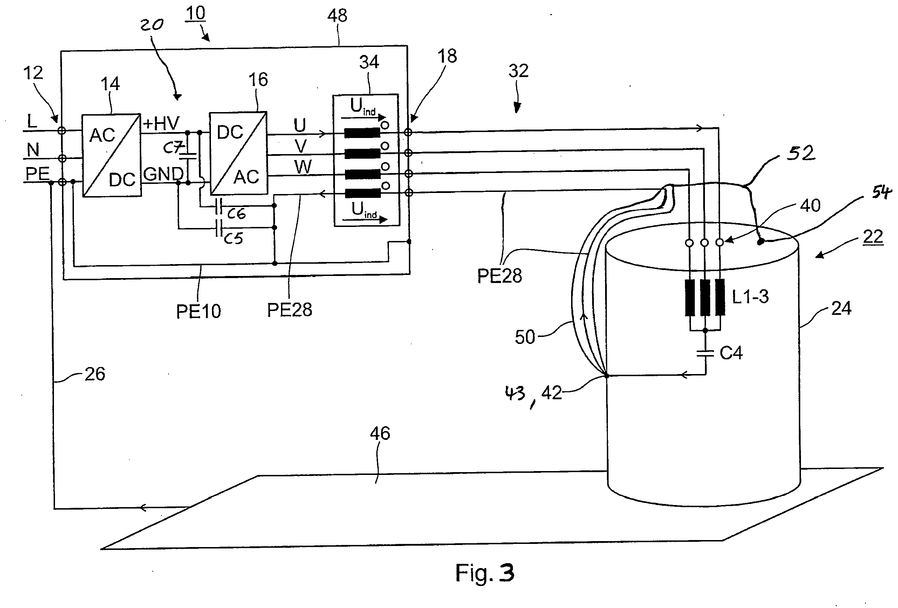

Fig. 3 zeigt zu Vergleichszwecken eine Ausführungsvariante einer Stromversorgungsvorrichtung nicht gemäß der Erfindung, an die ein Elektromotor zum Beispiel einer Wärmepumpe angeschlossen ist. Gleiche Komponenten und Bauteile sind dabei mit den gleichen Bezugszeichen wie in den vorherigen Ausführungsbeispielen gekennzeichnet.

Diese Ausführungsvariante unterscheidet sich vom zweiten Ausführungsbeispiel dadurch, dass in der Stromverbindungseinrichtung ein ungeschirmtes Motorkabel 32 eingesetzt wird. Nur das Kabelende des Schutzleiters PE28 auf der Motorseite ist mit einer Abschirmung 50 versehen. Wie im zweiten Ausführungsbeispiel ist diese Abschirmung 50 des Schutzleiters PE28 an beiden Endbereichen jeweils mit einem Schirmanschluss 43, 54 des Motorgehäuses 24 des Elektromotors 22 verbunden. Die oben beschriebenen Induktionsströme in der Abschirmung 50 können analog zum zweiten Ausführungsbeispiel über einen kurzen Stromkreis durch das Motorgehäuse 24 schließen, sodass die Schirmwirkung der Abschirmung 50 des Schutzleiters PE28 auch in diesem dritten Ausführungsbeispiel in vorteilhafter Weise vorhanden ist.

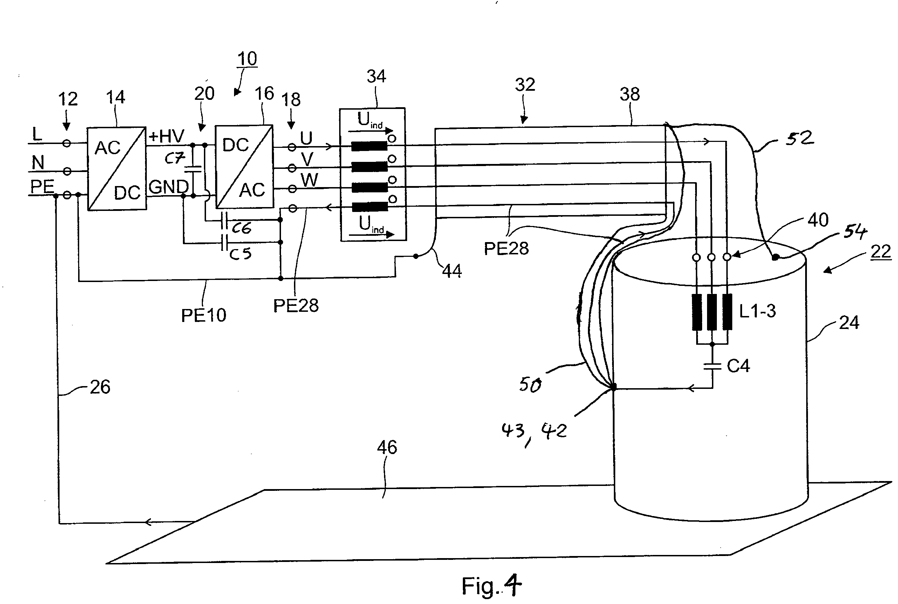

Fig. 4 zeigt ein drittes Ausführungsbeispiel einer Stromversorgungsvorrichtung gemäß der Erfindung, an die ein Elektromotor zum Beispiel einer Wärmepumpe angeschlossen ist. Gleiche Komponenten und Bauteile sind dabei mit den gleichen Bezugszeichen wie in den vorherigen Ausführungsbeispielen gekennzeichnet.

Das dritte Ausführungsbeispiel unterscheidet sich vom zweiten Ausführungsbeispiel dadurch, dass das Ausgangsfilter 34 nicht in den Umrichter 10 integriert ist, sondern als separate Komponente zwischen dem Umrichter 10 und dem Motorkabel 32 vorgesehen ist. In einer weiteren Ausführungsform der Erfindung kann das Ausgangsfilter 34 auch in das Motorkabel 32 integriert sein. Diese beiden Varianten kommen insbesondere dann in Betracht, wenn das Motorkabel 32 über einzelne Leitungen bzw. Adern U, V, W, PE28 verfügt.

Im Übrigen entsprechen Aufbau und Wirkungsweise der Stromversorgungsvorrichtung von Fig. 4 jenen der Stromversorgungsvorrichtung des zweiten Ausführungsbeispiels von Fig. 2. Als weitere Ausführungsform der Erfindung kann auch beim ersten Ausführungsbeispiel von Fig. 1 analog zum dritten Ausführungsbeispiel von Fig. 4 die Positionierung des Ausgangsfilters 34 verändert werden.

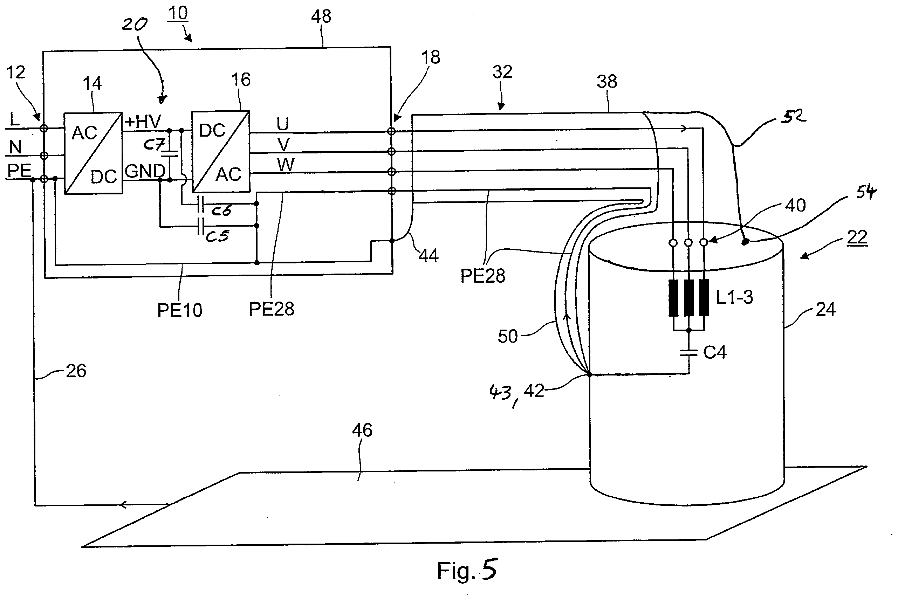

Fig. 5 zeigt ein viertes Ausführungsbeispiel einer Stromversorgungsvorrichtung gemäß der Erfindung, an die ein Elektromotor zum Beispiel einer Wärmepumpe angeschlossen ist. Gleiche Komponenten und Bauteile sind dabei mit den gleichen Bezugszeichen wie in den vorherigen Ausführungsbeispielen gekennzeichnet.

Das vierte Ausführungsbeispiel unterscheidet sich vom zweiten Ausführungsbeispiel dadurch, dass auf das Ausgangsfilter 34 verzichtet wird.

Im Übrigen entsprechen Aufbau und Wirkungsweise der Stromversorgungsvorrichtung von Fig. 5 jenen der Stromversorgungsvorrichtung des zweiten Ausführungsbeispiels von Fig. 2. Als weitere Ausführungsform der Erfindung kann auch beim ersten Ausführungsbeispiel von Fig. 1 analog zum vierten Ausführungsbeispiel von Fig. 5 auf das Ausgangsfilter 34 verzichtet werden.

In den Ausführungsbeispielen von Fig. 1, 2, 4 und 5 ist das Motorkabel 32 der Stromverbindungseinrichtung jeweils mit einer geerdeten Abschirmung 38 versehen. Zusätzlich kann das Motorkabel 32 auch eine ferromagnetische Umhüllung aufweisen, die zumindest die Motorphasenleiter U, V, W umgibt und aus einem ferromagnetischen Material oder Ferrit gebildet ist.

In den oben beschriebenen Ausführungsbeispielen von Fig. 1, 2, 4 und 5 ist der Umrichter 10 jeweils an eine Stromversorgungsquelle in Form eines Stromnetzes mit den Leitern L, N, PE angeschlossen bzw. anschließbar. In anderen Ausführungsvarianten der Erfindung kann der Umrichter 10 auch an ein dreiphasiges Stromnetz mit oder ohne Neutralleiter oder an eine Gleichspannungsquelle angeschlossen werden. Der Eingang 12 des Umrichters 10 ist dann mit entsprechenden Eingangsanschlüssen versehen, und im Fall einer Gleichspannungsquelle kann auf den Gleichrichter 14 im Umrichter 10 verzichtet werden.

### BEZUGSZIFFERNLISTE

- 10: Umrichter
- 12: Eingang
- 14: Gleichrichter
- 16: Wechselrichter
- 18: Ausgang
- 20: Gleichspannungszwischenkreis
- 22: Elektromotor
- 24: Motorgehäuse
- 26: Erdungssystem
- 32: Motorkabel
- 34: Ausgangsfilter
- 38: Abschirmung für Motorkabel
- 40: Motoranschlüsse
- 42: Erdungsanschluss des Elektromotors
- 43: erster Schirmanschluss des Motorgehäuses
- 44: Erdungsverbindung der Motorkabel-Abschirmung
- 46: Gerätegehäuse
- 48: Umrichtergehäuse
- 50: Abschirmung für Schutzleiter
- 52: Schirmverbindung der Schutzleiter-Abschirmung
- 54: zweiter Schirmanschluss des Motorgehäuses
- L: Außenleiter einer Stromversorgungsquelle
- N: Neutralleiter einer Stromversorgungsquelle
- PE: Schutzleiter einer Stromversorgungsquelle
- PE10: Erdung des Umrichters
- PE28: Schutzleiter der Stromverbindungseinrichtung
- U, V, W: Motorphasenleiter der Stromverbindungseinrichtung

## Patentansprüche

1. Stromversorgungsvorrichtung für einen Elektromotor, aufweisend:
einen Umrichter (10) mit einem Eingang (12) zum Anschließen des Umrichters (10) an eine Stromversorgungsquelle (L, N, PE), einem Wechselrichter (16) zum Bereitstellen einer Wechselspannung für einen Elektromotor (22) und einer mit einem Schutzleiter (PE) der Stromversorgungsquelle (L, N, PE) verbundenen Erdung (PE10), und
eine Stromverbindungseinrichtung zum Verbinden des Elektromotors (22) mit dem Wechselrichter (16) und der Erdung (PE10) des Umrichters (10), wobei die Stromverbindungseinrichtung mehrere Motorphasenleiter (U, V, W) und einen Schutzleiter (PE28) enthält, und wobei die Stromverbindungseinrichtung ein Motorkabel (32) aufweist, das zumindest Abschnitte der mehreren Motorphasenleiter (U, V, W) und des Schutzleiters (PE28) enthält und mit einer Abschirmung (38) versehen ist,
**dadurch gekennzeichnet, dass**
der Schutzleiter (PE28) der Stromverbindungseinrichtung im Bereich zwischen dem abgeschirmten Motorkabel (32) und dem Elektromotor (22) mit einer; weiteren Abschirmung (50) versehen ist, die mit wenigstens einem Schirmanschluss (43, 54) eines Motorgehäuses (24) des Elektromotors (22) verbunden ist.

2. Stromversorgungsvorrichtung nach Anspruch 1, bei welcher die Abschirmung (50) des Schutzleiters (PE28) zwischen dem abgeschirmten Motorkabel (32) und dem Elektromotor (22) einen ersten Endbereich und einen zweiten Endbereich aufweist, wobei der erste Endbereich mit einem ersten Schirmanschluss (43) des Motorgehäuses (24) des Elektromotors (22) verbunden ist und der zweite Endbereich mit einem zweiten Schirmanschluss (54) des Motorgehäuses (24) des Elektromotors (22) verbunden ist.

3. Stromversorgungsvorrichtung nach Anspruch 1, bei welcher die Abschirmung (50) des Schutzleiters (PE28) zwischen dem abgeschirmten Motorkabel (32) und dem Elektromotor (22) einen ersten Endbereich und einen zweiten Endbereich aufweist, wobei der erste Endbereich mit einem Schirmanschluss (43, 54) des Motorgehäuses (24) des Elektromotors (22) verbunden ist und der zweite Endbereich mit der Erdung (PE10) des Umrichters (10) verbunden ist.

4. Stromversorgungsvorrichtung nach einem der vorhergehenden Ansprüche, bei welcher
der Schutzleiter (PE28) der Stromverbindungseinrichtung mit einem Erdungsanschluss (42) des Elektromotors (22) verbunden ist und der eine Schirmanschluss (43, 54) oder der erste Schirmanschluss (43) des Motorgehäuses (24) des Elektromotors (22) durch diesen Erdungsanschluss (42) des Elektromotors (22) gebildet ist.

5. Stromversorgungsvorrichtung nach einem der vorhergehenden Ansprüche, bei welcher
die Abschirmung (38) des Motorkabels (32) mit der Abschirmung (50) des Schutzleiters (PE28) und/oder mit der Erdung (PE10) des Umrichters (10) verbunden ist.

6. Stromversorgungsvorrichtung nach einem der vorhergehenden Ansprüche, bei welcher
ferner ein Ausgangsfilter (34) vorgesehen ist, in dem die mehreren Motorphasenleiter (U, V, W) und der Schutzleiter (PE28) der Stromverbindungseinrichtung jeweils um einen Induktionskern gewickelt sind.

7. Stromversorgungsvorrichtung nach Anspruch 6, bei welcher
der Umrichter (10) einen Ausgang (18) aufweist, dessen Ausgangsanschlüsse mit dem Wechselrichter (16) und der Erdung (PE10) verbunden sind und an den das Motorkabel (32) angeschlossen ist oder anschließbar ist, und
das Ausgangsfilter (34) zwischen dem Wechselrichter (16) und dem Ausgang (18) des Umrichters (10) vorgesehen ist.

8. Stromversorgungsvorrichtung nach Anspruch 6, bei welcher
der Umrichter (10) einen Ausgang (18) aufweist, dessen Ausgangsanschlüsse mit dem Wechselrichter (16) und der Erdung (PE10) verbunden sind, und
das Ausgangsfilter (34) zwischen dem Ausgang (18) des Umrichters (10) und dem Motorkabel (32) vorgesehen ist.

9. Stromversorgungsvorrichtung nach Anspruch 6, bei welcher
der Umrichter (10) einen Ausgang (18) aufweist, dessen Ausgangsanschlüsse mit dem Wechselrichter (16) und der Erdung (PE10) verbunden sind und an den das Motorkabel (32) angeschlossen ist oder anschließbar ist, und
das Ausgangsfilter (34) in das Motorkabel (32) integriert ist.

10. Stromversorgungsvorrichtung nach einem der vorhergehenden Ansprüche, bei welcher
der Umrichter (10) einen Gleichrichter (14) zum Umwandeln einer Wechselspannung von der Stromversorgungsquelle (L, N, PE) in eine Gleichspannung und einen Gleichspannungszwischenkreis (20) zwischen dem Gleichrichter (14) und dem Wechselrichter (16) aufweist, und
der Schutzleiter (PE28) der Stromverbindungseinrichtung (28) kapazitiv (C5, C6) mit dem Gleichstromzwischenkreis (20) des Umrichters (10) verbunden ist.

11. Motorkabelvorrichtung zum Verbinden eines Elektromotors (22) mit einem Umrichter (10) für eine Stromversorgungsvorrichtung nach einem der vorhergehenden Ansprüche, aufweisend:
ein Motorkabel (32) mit mehreren Motorphasenleitern (U, V, W) und einem Schutzleiter (PE28), das mit einer Abschirmung (38) versehen ist, und
eine weitere Abschirmung (50) für den Schutzleiter (PE28) des Motorkabels (32) im Bereich zwischen dem abgeschirmten Motorkabel (32) und dem Elektromotor (22), wobei die Abschirmung (50) des Schutzleiters (PE28) mit wenigstens einem Schirmanschluss (43, 54) eines Motorgehäuses (24) des Elektromotors (22) verbindbar ist oder verbunden ist.

12. Motorkabelvorrichtung nach Anspruch 11, bei welcher
die Abschirmung (50) des Schutzleiters (PE28) zwischen dem abgeschirmten Motorkabel (32) und dem Elektromotor (22) einen ersten Endbereich und einen zweiten Endbereich aufweist, wobei der erste Endbereich mit einem ersten Schirmanschluss (43) des Motorgehäuses (24) des Elektromotors (22) verbindbar ist oder verbunden ist und der zweite Endbereich mit einem zweiten Schirmanschluss (54) des Motorgehäuses (24) des Elektromotors (22) verbindbar ist oder verbunden ist.

13. Motorkabelvorrichtung nach Anspruch 11, bei welcher
die Abschirmung (50) des Schutzleiters (PE28) zwischen dem abgeschirmten Motorkabel (32) und dem Elektromotor (22) einen ersten Endbereich und einen zweiten Endbereich aufweist, wobei der erste Endbereich mit einem Schirmanschluss (43, 54) des Motorgehäuses (24) des Elektromotors (22) verbindbar ist oder verbunden ist und der zweite Endbereich mit einer Erdung (PE10) eines Umrichters (10), an den die Motorphasenleiter (U, V, W) und der Schutzleiter (PE28) des Motorkabels (32) anschließbar sind oder angeschlossen sind, verbindbar ist oder verbunden ist.

14. Motorkabelvorrichtung nach einem der Ansprüche 11 bis 13, bei welcher
die Abschirmung (38) des Motorkabels (32) mit der Abschirmung (50) des Schutzleiters (PE28) verbunden ist.

## Claims

1. Power supply device for an electric motor, having:
a converter (10) having an input (12) for connecting the converter (10) to a power source (L, N, PE), an inverter (16) for providing an AC voltage for an electric motor (22) and an earth connection (PE10) connected to a protective earth (PE) of the power source (L, N, PE), and
a power connection apparatus for connecting the electric motor (22) to the inverter (16) and the earth connection (PE10) of the converter (10), wherein the power connection apparatus contains a plurality of motor phase conductors (U, V, W) and a protective earth (PE28), and
wherein the power connection apparatus has a motor cable (32) that contains at least sections of the plurality of motor phase conductors (U, V, W) and of the protective earth (PE28) and is provided with a shield (38),
**characterized in that**
the protective earth (PE28) of the power connection apparatus is provided with a further shield (50) in the region between the shielded motor cable (32) and the electric motor (22), which further shield is connected to at least one shield terminal (43, 54) of a motor housing (24) of the electric motor (22).

2. Power supply device according to Claim 1, in which the shield (50) of the protective earth (PE28) has a first end region and a second end region between the shielded motor cable (32) and the electric motor (22), wherein the first end region is connected to a first shield terminal (43) of the motor housing (24) of the electric motor (22) and the second end region is connected to a second shield terminal (54) of the motor housing (24) of the electric motor (22).

3. Power supply device according to Claim 1, in which the shield (50) of the protective earth (PE28) has a first end region and a second end region between the shielded motor cable (32) and the electric motor (22), wherein the first end region is connected to a shield terminal (43, 54) of the motor housing (24) of the electric motor (22) and the second end region is connected to the earth connection (PE10) of the converter (10) .

4. Power supply device according to one of the preceding claims, in which
the protective earth (PE28) of the power connection apparatus is connected to an earth connection terminal (42) of the electric motor (22) and the shielding terminal (43, 54) or the first shielding terminal (43) of the motor housing (24) of the electric motor (22) is formed by this earth connection terminal (42) of the electric motor (22).

5. Power supply device according to one of the preceding claims, in which
the shield (38) of the motor cable (32) is connected to the shield (50) of the protective earth (PE28) and/or to the earth connection (PE10) of the converter (10).

6. Power supply device according to one of the preceding claims, in which
an output filter (34) is furthermore provided, in which the plurality of motor phase conductors (U, V, W) and the protective earth (PE28) of the power connection apparatus are each wound around an inductive core.

7. Power supply device according to Claim 6, in which
the converter (10) has an output (18) whose output terminals are connected to the inverter (16) and the earth connection (PE10) and to which the motor cable (32) is connected or is able to be connected, and
the output filter (34) is provided between the inverter (16) and the output (18) of the inverter (10).

8. Power supply device according to Claim 6, in which
the inverter (10) has an output (18) whose output terminals are connected to the inverter (16) and the earth connection (PE10), and
the output filter (34) is provided between the output (18) of the converter (10) and the motor cable (32).

9. Power supply device according to Claim 6, in which
the converter (10) has an output (18) whose output terminals are connected to the inverter (16) and the earth connection (PE10) and to which the motor cable (32) is connected or is able to be connected, and
the output filter (34) is integrated into the motor cable (32) .

10. Power supply device according to one of the preceding claims, in which
the converter (10) has a rectifier (14) for converting an AC voltage from the power source (L, N, PE) into a DC voltage and a DC voltage intermediate circuit (20) between the rectifier (14) and the inverter (16), and
the protective earth (PE28) of the power connection apparatus (28) is capacitively (C5, C6) connected to the DC current intermediate circuit (20) of the converter (10) .

11. Motor cable device for connecting an electric motor (22) to a converter (10) for a power supply device according to one of the preceding claims, having:
a motor cable (32) having a plurality of motor phase conductors (U, V, W) and a protective earth (PE28) that is provided with a shield (38), and a further shield (50) for the protective earth (PE28) of the motor cable (32) in the region between the shielded motor cable (32) and the electric motor (22), wherein the shield (50) of the protective earth (PE28) is connected or is able to be connected to at least one shield terminal (43, 54) of a motor housing (24) of the electric motor (22).

12. Motor cable device according to Claim 11, in which the shield (50) of the protective earth (PE28) has a first end region and a second end region between the shielded motor cable (32) and the electric motor (22), wherein the first end region is able to be connected or is connected to a first shield terminal (43) of the motor housing (24) of the electric motor (22) and the second end region is able to be connected or is connected to a second shield terminal (54) of the motor housing (24) of the electric motor (22).

13. Motor cable device according to Claim 11, in which the shield (50) of the protective earth (PE28) has a first end region and a second end region between the shielded motor cable (32) and the electric motor (22), wherein the first end region is able to be connected or is connected to a shield terminal (43, 54) of the motor housing (24) of the electric motor (22) and the second end region is able to be connected or is connected to an earth connection (PE10) of a converter (10) to which the motor phase conductors (U, V, W) and the protective earth (PE28) of the motor cable (32) are able to be connected or are connected.

14. Motor cable device according to one of Claims 11 to 13, in which
the shield (38) of the motor cable (32) is connected to the shield (50) of the protective earth (PE28).

## Revendications

1. Dispositif d'alimentation en courant pour un moteur électrique, présentant :
un convertisseur (10) muni d'une entrée (12) pour connecter le convertisseur (10) à une source d'alimentation en courant (L, N, PE), un onduleur (16) pour fournir une tension alternative pour un moteur électrique (22) et une prise de terre (PE10) reliée à un conducteur de protection (PE) de la source d'alimentation en courant (L, N, PE), et
un dispositif de liaison électrique permettant de relier le moteur électrique (22) à l'onduleur (16) et à la prise de terre (PE10) du convertisseur (10), le dispositif de liaison électrique comprenant plusieurs conducteurs de phase de moteur (U, V, W) et un conducteur de protection (PE28), et le dispositif de liaison électrique présentant un câble de moteur (32) qui comprend au moins des tronçons des plusieurs conducteurs de phase de moteur (U, V, W) et du conducteur de protection (PE28) et est muni d'un blindage (38),
**caractérisé en ce que** le conducteur de protection (PE28) du dispositif de liaison électrique, dans la zone entre le câble de moteur blindé (32) et le moteur électrique (22), est muni d'un blindage (50) supplémentaire qui est relié à au moins un raccordement de blindage (43, 54) d'un carter de moteur (24) du moteur électrique (22).

2. Dispositif d'alimentation en courant selon la revendication 1, dans lequel le blindage (50) du conducteur de protection (PE28) présente une première zone d'extrémité et une deuxième zone d'extrémité entre le câble de moteur blindé (32) et le moteur électrique (22), la première zone d'extrémité étant reliée à un premier raccordement de blindage (43) du carter de moteur (24) du moteur électrique (22) et la deuxième zone d'extrémité étant reliée à un deuxième raccordement de blindage (54) du carter de moteur (24) du moteur électrique (22).

3. Dispositif d'alimentation en courant selon la revendication 1, dans lequel le blindage (50) du conducteur de protection (PE28) présente une première zone d'extrémité et une deuxième zone d'extrémité entre le câble de moteur blindé (32) et le moteur électrique (22), la première zone d'extrémité étant reliée à un raccordement de blindage (43, 54) du carter de moteur (24) du moteur électrique (22) et la deuxième zone d'extrémité étant reliée à la prise de terre (PE10) du convertisseur (10).

4. Dispositif d'alimentation en courant selon l'une quelconque des revendications précédentes, dans lequel le conducteur de protection (PE28) du dispositif de liaison électrique est relié à une borne de terre (42) du moteur électrique (22), et ledit un raccordement de blindage (43, 54) ou le premier raccordement de blindage (43) du carter de moteur (24) du moteur électrique (22) est constitué par cette borne de terre (42) du moteur électrique (22).

5. Dispositif d'alimentation en courant selon l'une quelconque des revendications précédentes, dans lequel le blindage (38) du câble de moteur (32) est relié au blindage (50) du conducteur de protection (PE28) et/ou à la prise de terre (PE10) du convertisseur (10).

6. Dispositif d'alimentation en courant selon l'une quelconque des revendications précédentes, dans lequel en outre un filtre de sortie (34) est prévu dans lequel les plusieurs conducteurs de phase de moteur (U, V, W) et le conducteur de protection (PE28) du dispositif de liaison électrique sont respectivement enroulés sur un noyau à induction.

7. Dispositif d'alimentation en courant selon la revendication 6, dans lequel le convertisseur (10) présente une sortie (18) dont les bornes de sortie sont reliées à l'onduleur (16) et à la prise de terre (PE10) et à laquelle le câble de moteur (32) est ou peut être connecté, et le filtre de sortie (34) est prévu entre l'onduleur (16) et la sortie (18) du convertisseur (10) .

8. Dispositif d'alimentation en courant selon la revendication 6, dans lequel le convertisseur (10) présente une sortie (18) dont les bornes de sortie sont reliées à l'onduleur (16) et à la prise de terre (PE10), et le filtre de sortie (34) est prévu entre la sortie (18) du convertisseur (10) et le câble de moteur (32) .

9. Dispositif d'alimentation en courant selon la revendication 6, dans lequel le convertisseur (10) présente une sortie (18) dont les bornes de sortie sont reliées à l'onduleur (16) et à la prise de terre (PE10) et à laquelle le câble de moteur (32) est ou peut être connecté, et le filtre de sortie (34) est intégré dans le câble de moteur (32).

10. Dispositif d'alimentation en courant selon l'une quelconque des revendications précédentes, dans lequel
le convertisseur (10) présente un redresseur (14) pour convertir une tension alternative provenant de la source d'alimentation en courant (L, N, PE) en une tension continue et un circuit intermédiaire à tension continue (20) entre le redresseur (14) et l'onduleur (16), et
le conducteur de protection (PE28) du dispositif de liaison électrique (28) est relié de manière capacitive (C5, C6) au circuit intermédiaire à courant continu (20) du convertisseur (10).

11. Dispositif de câble de moteur pour relier un moteur électrique (22) à un convertisseur (10) pour un dispositif d'alimentation en courant selon l'une quelconque des revendications précédentes, présentant :
un câble de moteur (32) comprenant plusieurs conducteurs de phase de moteur (U, V, W) et un conducteur de protection (PE28) qui est muni d'un blindage (38), et
un blindage supplémentaire (50) pour le conducteur de protection (PE28) du câble de moteur (32) dans la zone entre le câble de moteur blindé (32) et le moteur électrique (22), le blindage (50) du conducteur de protection (PE28) pouvant être ou étant relié à au moins un raccordement de blindage (43, 54) d'un carter de moteur (24) du moteur électrique (22).

12. Dispositif de câble de moteur selon la revendication 11, dans lequel le blindage (50) du conducteur de protection (PE28) présente entre une première zone d'extrémité et une deuxième zone d'extrémité le câble de moteur blindé (32) et le moteur électrique (22), la première zone d'extrémité pouvant être ou étant reliée à un premier raccordement de blindage (43) du carter de moteur (24) du moteur électrique (22), et la deuxième zone d'extrémité pouvant être ou étant reliée à un deuxième raccordement de blindage (54) du carter de moteur (24) du moteur électrique (22).

13. Dispositif de câble de moteur selon la revendication 11, dans lequel le blindage (50) du conducteur de protection (PE28) présente une première zone d'extrémité et une deuxième zone d'extrémité entre le câble de moteur blindé (32) et le moteur électrique (22), la première zone d'extrémité pouvant être ou étant reliée à un raccordement de blindage (43, 54) du carter de moteur (24) du moteur électrique (22), et la deuxième zone d'extrémité pouvant être ou étant reliée à une prise de terre (PE10) d'un convertisseur (10) auquel les conducteurs de phase de moteur (U, V, W) et le conducteur de protection (PE28) du câble de moteur (32) peuvent être ou sont connectés.

14. Dispositif de câble de moteur selon l'une quelconque des revendications 11 à 13, dans lequel le blindage (38) du câble de moteur (32) est relié au blindage (50) du conducteur de protection (PE28).
